(19) Europäisches Patentamt
European Patent Office
Office européen des brevets

(11) Publication number: 0 290 157 A1

(12) **EUROPEAN PATENT APPLICATION**

(21) Application number: 88303473.8

(22) Date of filing: 18.04.88

(51) Int. Cl.[4]: C08K 5/42 , C08L 33/00 , //(C08L33/00,67:00,61:20)

(30) Priority: 08.05.87 US 47264

(43) Date of publication of application: 09.11.88 Bulletin 88/45

(84) Designated Contracting States: DE FR GB

(71) Applicant: KING INDUSTRIES, INC.
Science Road
Norwalk Connecticut 06852(US)

(72) Inventor: Blank, Werner Josef
89 Spectacle Lane
Wilton Fairfield Connecticut(US)

(74) Representative: Allam, Peter Clerk et al
LLOYD WISE, TREGEAR & CO. Norman House 105-109 Strand
London WC2R 0AE(GB)

(54) **Oxazolidine salts, polymers and copolymers thereof.**

(57) There are provided certain blocked catalyst materials prepared by reacting certain high molecular weight oxazolidines or polymeric oxazolidines with an acidic material to form a salt product which can be utilized with other polymeric materials and mixtures thereof, particularly in the field of coating resins.

EP 0 290 157 A1

# OXALIDINE SALTS, POLYMERS AND COPOLYMERS THEREOF

## BACKGROUND OF THE INVENTION

Acid catalysts blocked with primary, secondary and tertiary amines are used as catalysts for amino resin cross-linked coatings. These catalysts provide high solids coatings which are stable at room temperature and cure at elevated temperatures. Although different mechanisms have been reported for the stability at room temperature and cure at higher temperatures, one possible mechanism is the evaporation of the amine at a higher temperature resulting in the free acid and cure of the amino resin with or without other reactive components of a coating composition. Although this approach is effective, it has certain disadvantages, the low boiling amines have a very unpleasant odor and in addition, are very toxic. As a blocking group, they have the disadvantage that they have a tendency to cause film imperfections such as low gloss and micro wrinkling. The problem is presumably caused by different cure speeds on the surface and the lower layer of the coating. The use of higher boiling amines has shown to reduce this problem, but this results in a reduction in cure response. A more detailed discussion on this problem of catalysis and selection of amine blocking agents can be found in the technical literature.

## THE PRIOR ART

The instant applicant is aware of the U.S. Patents 4,200,729 and 4,251,665. Attention is further directed to the Journal of Coatings Technology, Volume 52; No. 660; Pages 75-83. "High Solids Coatings" Volume 7/No.3 September 1982, published by Technology Marketing Corp., 17 Park Street Norwalk, CT 06851, Technical Bulletin CRT-159, American Cyanamid Company. Wayne N.J. Each of these citations are incorporated herein by reference.

## DESCRIPTION OF THE INVENTION

This invention relates to certain non-volatile high molecular weight oxazolidines or polymeric oxazolidines having a molecular weight of at least 350, which have been formed into a salt and then made useful as a blocking agent by use of certain acidic materials which have a pK value of 2.5 or less. These oxazolidine blocking agents are prepared by reacting an amine such as diethanol amine with paraformaldehyde in the presence of an inert organic solvent and after suitable heating the resultant oxazolidine is then reacted with methyl stearate in the presence of a transesterification catalyst while removing methanol to produce an oxazolidine ester as a waxy solid having a molecular weight of about 379. This oxazolidone ester is soluble in aromatic hydrocarbons and has a cure temperature of about 125°C. although this oxazolidine ester is not normally volatile. The complete details for the preparation of this oxazolidine ester will be set forth in one of the working examples hereinbelow. The oxazolidine compounds used in the present invention may be represented as those having the structural formula:

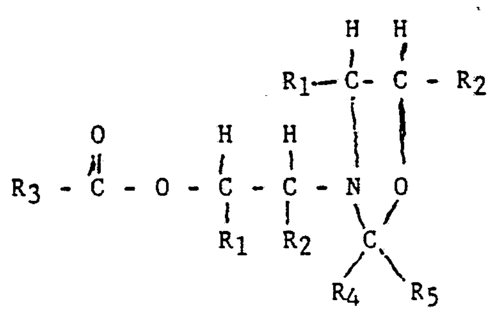

wherein $R_1$ and $R_2$ are separately either a $C_1$ to $C_{18}$ alkyl moiety, a $-CH_2-O-R_1$ or H; $R_3$ is $R_1$, or $R_2$, or is a polyester or acrylic moiety; $R_4$ or $R_5$ are separately H, or a $C_1$ to $C_{18}$ moiety, or a cyclic $C_4$-$C_5$ moiety; or $R_4$ may be a valence bond to another carbon of a different oxazolidine moiety; completely or partially neutralized with an acid having a pK value below about 2.5 and wherein at least one of the $R_1$, $R_2$, $R_3$, $R_4$ and $R_5$ is an alkyl group or a polyester or an acrylic moiety so as to provide said minimum molecular weight of at least 350.

Among the acids which may be used to form a salt or an ester with the oxazolidines which have a pK value of less than 2.5, the o-aminobenzosulfonic acid, benzosulfonic acid, cyanocetic acid, ( $\gamma$ )-cyanobutyric acid, cyanopropionic acid, cyclopropane-1:1-dicarboxcylic acid, dichloroacet acid, dichloroacetylacetic acid, dihydroxymalic acid, dihydroxytartaric acid, lutidinic acid, maleic acid, naphthalenesulfonic acid, picric acid, trichloroacetic acid, trihydroxybenzoic (2, 4, 6-) acid, trinitrophenol (2, 4, 6-), arsenic acid, chromic acid, iodic acid, periodic acid, orthophosphoric acid, phosphorous acid, pyrophosphoric acid, selenic acid, selenious acid, sulfuric acid, sulfurous acid, tellurous acid and the like. Additionally, one may use such typical acids as the sulfonic acids, including the toluene sulfonic acids included in other alkylbenzene sulfonic acids, the alkylnaphthalene sulfonic acids or the phosphoric acids or the mono or dialkyl phosphates or organic acid esters such as the mono butyl maleate. The acid may be neutralized with molar equivalents of the oxazolidine blocking agent but additionally one can also use excess oxazolidine blocking agent. The amount of this catalytic material is used at a concentration of about 0.1 to 5, preferably between 0.5 and 5 weight percent of the acid to the total binder of the system. These high molecular weight oxazolidines or even polymeric oxazolidines can be used as a blocking group in order to give a cure at a temperature as low as 100-125°C. or correspondingly 212-257°F.

The $R_3$ group, if derived from a polyester resin, can contain typical mono, di and tri basic carboxylic acids or the corresponding anhydrides if available, reacted with a diol, triol, tetrol or higher polyol. Typical components for the preparation of a polyester are carboxylic acids such as $C_1$ to $C_{18}$ monocarboxylic and polycarboxylic acids, adipic, glutaric, malonic, sebacic, maleic, o-,m-,p-phthalic acid, trimellitic anhydride, and diols like ethylene, propylene, 1,3-butylene, 1,4-butylene, 1,5-pentane, 1,6-hexane diols or cyclohexanedimethanol. Or a triol or higher polyol such as glycerine, trimethylolpropane, trimethylolethane, pentaerythritol, sorbitol and the like.

If $R_3$ represents an acrylic group, it can be derived from typical $C_1$ to $C_{18}$ $\alpha,\beta$-ethylenically unsaturated carboxylic acids such as acrylic or methacrylic acids or esters thereof, styrene or alkylstyrenes or acrylonitrile. In addition, it can contain carboxyl groups derived from acrylic acid, methacrylic acid, maleic, itaconic, aconitic acid and the like, or hydroxyl groups containing esters such as those derived from hydroxylalkyl esters of the above $\alpha,\beta$-carboxylic acids. Due to the fact that the condensation and polymerization process is a random process, a polyester which contains oxazolidine groups will usually contain more than one oxazolidine functional group.

One typical mono functional alcohol which can be used to incorporate the oxazolidine moiety into a polyester resin is the reaction product of diethanolamine or diisopropanolamine with an aldehyde or a ketone. The resulting hydroxyalkyl oxazolidine can then be directly esterified or preferably incorporated into a polyester or acrylic resin by transesterification of a methylester with the oxazolidine. Direct esterification with a carboxylic acid is to be avoided; the water formed during the esterification of a hydroxyl group and a carboxyl group can lead to the hydrolysis of the oxazolidine moiety.

So, for example, when a polyester is prepared from a diol and a dimethylester of adipic or glutaric acid and the like, an excess of dimethyl ester is used to obtain a product with methylester end groups. This methyl ester functional polyester is reacted with a hydroxyethyl oxazolidine. A typical process of incorporating the oxazolidine group into an acrylic resin involves the transesterification of methylmethacrylate with a monomeric hydroxyalkyl oxazolidine with subsequent polymerization of the thus obtained oxazolidine functional monomer.

Many of the amino resin cross-linking coatings selected from the type consisting of fully alkylated melamine formaldehyde resins, or the fully alkylated benzoguanamine-formaldehyde resins require an acid catalyst for optimum cure response. Unfortunately, this acid catalyst also impairs the pot life of the coating. Therefore, it has become a common practice to block the acid catalyst with an amine. The present invention, on the other hand, has an advantage against the previously described amines in that the amine is essentially non-volatile at the cure temperature and still has no significant inhibiting effect on the cure response. In addition to these aminoplast resins, one can provide a polyester moiety that contains dibasic acids like glutaric, adipic, phthalic, isophthalic, terephthalic, sebacic or the tribasic acids like trimellitic acid. The diol portion of the polyester can be derived from such polyhydric alcohols as ethylene glycol, propylene glycol, butane diols, hexane diols, cyclohexane diols and optionally a triol such as glycerol can be present.

The acrylic resin used in the present invention can be derived from many conventional acrylic monomers like the $C_1$ to $C_{18}$ alkylesters of acrylic and/or methacrylic acid which can also contain styrene or an alkyl styrene or an $\alpha,\beta$, ethylenically unsaturated monocarboxylic acid such as acrylic acid, methacrylic acid and the like as a co-monomer. In addition, it can contain other functional monomers such as a hydroxyalkyl acrylate, including the hydroxyalkyl methacrylates.

All of these aminoplast resins, the polyester resins and the acrylic polymers are exceedingly well known in the art and are commercially available from a plurality of commercial sources, and as a consequence, further delineation of these materials is deemed to be unnecessary. It is essential that the oxazolidine moiety is not volatile under typical baking conditions.

In order that the concept of the present invention may be more fully understood, the following examples are set forth in which all parts are parts by weight unless otherwise indicated. These examples are set forth primarily for the purpose of illustration and any specific enumeration of detail contained therein should not be interpreted as a limitation on this application except as is indicated in the appended claims.

Example 1

A commercially available alkylbenzene sulfonic acid is blended in the weight ratios as shown below. The reaction is slightly exothermic and cooling is required.

| | | |
|---|---|---|
| Dodecylbenzene sulfonic acid | 0.2475 mol | 75 parts by weight |
| Oxazolidine functional polymer | 0.3 mol | 60 parts by weight |
| Toluene | | 13 parts by weight |

An aqueous/methanol solution of this catalyst has a pH of 7.5. The oxazolidine functional polymer is commercially available as polyester Reactive diluent QM-1007 from Rohm & Haas.

Example 2

A commercially available high solids acrylic resin (Acryloid AT-400 Rohm & Haas) is blended with a polyester flexibilizer (Kflex 188 King Ind. Inc.) and hexamethoxymethylmelamine. The catalyst from example 1 is added. The formulation is diluted with n-butanol and 2-methoxy propanol solvent. The proportions are set forth hereinbelow.

| | WEIGHT% CALC | CHARGE AS IS |
|---|---|---|
| ACRYLIC Acryloid AT-400 (75%) | 53.43 | 93.33 |
| POLYOL Kflex 188 (98%) * | 22.90 | 30.61 |
| HMMM (98%) | 23.17 | 30.36 |
| Catalyst example 1 | 0.50 | 1.29 |
| n-BUTANOL | | 10.00 |
| ARCOSOLV PM (2-methoxy 1-propanol) | | 20.00 |
| TOTAL | 100.00 | 185.59 |

The formulation was drawn on Bonderite 1000 iron phosphate pretreated cold rolled steel panels and cured as shown. Excellent cure was obtained at 120°C. cure temperature.

* A commercially available polyester flexibilizer.

TABLE I

RESULTS

| | | | |
|---|---|---|---|
| SOLIDS% CALC. | | | 70.59 |
| CURE SCHEDULE | | 20MIN 120°C. | 150°C. |
| Bonderite 1000 cold rolled steel | | | |
| mil (Film Thickness) | .75-.85 | .75-.85 | |
| PENCIL HARDNESS | | F - H | F - H |
| KNOOP 25g | | 9.5 | 13.0 |
| IMPACT REVERSE IN.LB | | 60-70 | 20-30 |
| FRONT IN.LB | | 110-20 | 60-70 |
| ADHESION CROSSHATCH% | | 40 | 80 |
| SALTSPRAY 100HRS | | 3mm,CORR | 7mm,CORR |
| CLEVELAND HUMIDITY 43°C. | | | |
| 500 HRS | | HB-F,10 | F-H,10 |
| MEK Solvent rubs | | >200 | >200 |
| VISCOSITY STABILITY 50°C. | | | |
| Viscosity in cps | | | |
| DAYS 0 | | | 459.00 |
| 7 | | | 3670.00 |
| 14 | | | 4360.00 |

## Example 3

To 100 parts by weight of a 55% solution of dinonylnaphthalene-disulfonic acid in isobutanol 48 parts by weight of a oxazolidine functional polymer are added (QM-1007). The solution has a pH in water of about 7.0.

## Example 4

To a high solids acrylic resin solution, a polyol flexibilizer and a hexamethoxymethylmelamine cross-linker are added, together with the catalyst solution of Example 3. The resulting viscous clear coating is diluted with solvent and applied on iron phosphated cold rolled steel and cured.

| | WEIGHT% CALC | CHARGE AS IS |
|---|---|---|
| ACRYLIC Acryloid AT-400 | 53.43 | 93.33 |
| POLYOL Kflex 188 | 22.90 | 30.61 |
| HMMM | 23.17 | 30.36 |
| Catalyst example (3) | 0.50 | 1.76 |
| n-BUTANOL | | 10.00 |
| ARCOSOLV PM | | 20.00 |
| TOTAL | 100.00 | 186.06 |
| RESULTS | | |
| SOLIDS% CALC | | 70.41 |

TABLE II

| CURE SCHEDULE | 20MIN 120°C. | 150°C. |
|---|---|---|
| BO 1000 ---------------------------------- | | |
| FILMTH. mil | .75-.85 | .75-.85 |
| HARDN. PENCIL | HB-F | F-H |
| KNOOP 25g | 8.0 | 13.0 |
| IMPACT REVERSE IN.LB | >160 | 20-30 |
| FRONT IN.LB | >160 | 60-70 |
| ADHESION CROSSHATCH% | 50 | 25 |
| SALTSPRAY 100HRS | 5mm,CORR | 5mm,CORR |
| CLEVELAND HUMIDITY 43°C. | | |
| 500 HRS | HB-F,10 | F-H,10 |

VISCOSITY STABILITY 50°C.
Viscosity in cps

| DAYS | |
|---|---|
| 0 | 458.00 |
| 7 | 1290.00 |
| 14 | 2610.00 |

The coating system shows excellent cure, improved stability and high gloss, no wrinkling can be observed.

Example 5

Preparation of an oxazolidine blocking agent. To 105 parts by weight of diethanolamine, 33 parts by weight of paraformaldehyde are added. The mixture is heated and 50 parts of toluene are added. The paraformaldehyde dissolves in the mixture. Water formed during the reaction is removed by azeotrope. About 21 parts by weight of water are collected.

The resulting oxazolidine is reacted with 294 parts of methyl stearate at temperatures of 130-160C. using a tin transesterification catalyst. About 32 parts by weight of methanol are collected. The resulting oxazolidine ester is a waxy solid. The molecular weight is about 379. This oxazolidine ester is soluble in aromatic hydrocarbons. At a cure temperature of 125°C., this oxazolidine ester is not volatile.

Example 6

To 397 parts by weight of the oxazolidine ester of Example 5, 303 parts by weight of dodecylbenzene sulfonic acid and 512 parts of xylene are added.

Example 7

Example 2 is repeated in all details with the exception that the catalyst is replaced with equal molar amounts of the catalyst from example 6. Good cure is obtained at 125° and 150°C.

Example 8

62.3 parts by weight of a commercially available oxazolidine functional acrylic resin (Acryloid AU-568 of Rohm & Haas Co.) is blended with 30.3 parts by weight of dodecylbenzene sulfonic acid. The mixture is diluted to 50% solids with 73.9 parts by weight of n-butanol. The resulting blocked catalyst solution is used as a catalyst in the following example.

Example 9

The acrylic resin is blended with the hexamethoxymethylmelamine resin (HMMM) and the catalyst and the solvent are added to this mixture. After aging for 24 hours, the coating is drawn onto iron phosphated cold rolled steel panels and cured.

| | WEIGHT% CALC | AS IS CHARGE |
|---|---|---|
| Acryloid AT-400 | 79.60 | 133.33 |
| HMMM | 19.90 | 25.51 |
| Catalyst solution example 8 | 0.50 | 2.75 |
| n-butanol | | 60.00 |
| Total | 100.00 | 221.34 |

TABLE III

| | |
|---|---|
| SOLIDS% CALC | 56.76 |
| SOLIDS 60'110°C. | 54.58 |
| SOLIDS +30'120°C | 53.86 |
| VISC. CPS | 190.00 |
| BONDER 1000 CRS ------------ | |
| CURE SCHEDULE | 20' 120°C |
| FILMTH. MIL | 0.45 |
| HARDN. PENCIL | F-H |
| IMPACT REVERSE IN.LB | 20-30 |
| FRONT IN.LB | 50-60 |
| SALTSPRAY 100 HRS. | 12mm,ADH.LOSS |
| | 3mm,CORR |
| CLEVELAND HUMID. 43°C. 250 HRS | B-HB,10 |
| CROSS HATCH ADHESION % | 100 |

Example 10

(comparative example)

The acrylic and the polyol resin are blended with the catalyst solution (dodecylbenzene sulfonic acid neutralized with diisopropanol amine), solvents are added. The coating is applied on cold rolled steel panels and cured. Good cure is obtained at 120° and 150°C.

| | WEIGHT % | CHARGE AS IS |
|---|---|---|
| ACRYLIC (Acryloid AT-400) | 53.17 | 93.33 |
| POLYOL (Kflex 188) | 22.79 | 30.61 |
| HMM | 23.06 | 30.36 |
| DDBSA blocked with DIOPA | 0.99 | 1.86 |
| n-BUTANOL | | 10.00 |
| ARCOSOLV PM | | 20.00 |
| TOTAL | 100.00 | 186.16 |

TABLE IV

| RESULTS | | |
|---|---|---|
| SOLIDS% CALC | 70.72 | |
| CURE SCHEDULE | 20MIN 120°C. | 150°C |
| BO 1000 | | |
| FILMTH. mil | .75-.85 | .75-.85 |
| HARDN. PENCIL | HB-F | F-H |
| Knoop Hardness | | |
| IMPACT REVERSE IN.LB | >160 | 30-40 |
| FRONT IN.LB | >160 | 50-60 |
| ADHESION CROSSHATCH% | 100 | 80 |
| SALTSPRAY 100 HRS | 5mm corr | 10mm corr |
| | | 50-60 |
| VISCOSITY STABILITY 50°C. | | |
| Viscosity cps | | |
| DAYS 0 | 495 | |
| 7 | 1350 | |
| 14 | 3540 | |

The formulation above gives acceptable film appearance at a film thickness of about one mil., but has a tendency to wrinkle at edges and at higher film thickness.

Example 11

(comparative example)

The acrylic resin is blended with the polyester and melamine resin and catalyst and solvent. Although good cure has been obtained at 120°C., the formulation is not stable at 50°C. and even at room temperature will gel after 5 days.

| | WEIGHT % | CHARGE AS IS |
|---|---|---|
| ACRYLIC | 53.17 | 93.33 |
| POLYOL | 22.79 | 30.61 |
| CYMEL 303 | 23.06 | 30.36 |
| DDBSA 70% in IPA | 0.99 | 1.86 |
| n-BUTANOL | | 10.00 |
| ARCOSOLV PM | | 20.00 |
| TOTAL | 100.00 | 186.16 |

TABLE V

| RESULTS | |
|---|---|
| SOLIDS% CALC | 70.72 |
| CURE SCHEDULE | 20MIN 120°C. |
| FILMTH. mil | .75-.85 |
| HARDN. PENCIL no | H-F |
| Knoop 25g | 9.5 |
| IMPACT REVERSE IN.LB | 50-60 |
| FRONT IN.LB | 80-90 |
| ADHESION CROSSHATCH% | 50 |
| VISCOSITY STABILITY 25°C. | |
| Viscosity cps | |
| DAYS 0 | 499 |
| 7 | Gel |

The acrylic moiety of this invention can be derived from conventional acrylic monomers like the $C_1$ to $C_{18}$ alkyl esters of acrylic or methacrylic acid it can also contain styrene or an alkyl styrene as a co monomer. In addition, it can contain functional monomers such as a hydroxyalkyl acrylate. These are only examples and by no means represent all varieties of polyesters or acrylic polymers which can represent the R3 moiety. It is essential that the oxazolidine moiety is not volatile under typical baking conditions.

It has been mentioned hereinabove that a cross-linker such as the hexaalkoxymethylmelamines can be used in the compositions of the present invention. This material is in fact a partially monomeric material which is capable of self crosslinking to form a resinous material or which can cross-link with other cross-linkable materials to form a macro-molecule. The alkoxy group in the hexaalkoxymethylmelamine will be derived from whatever monohydric alcohol is used to alkylate the hexamethylolmelamine such as the methanol to form the hexamethoxymethylmelamine or alternatively one may use the ethanol, propanol, butanol, and the like, to form corresponding monomeric cross-linking agents which are capable of being acid catalyzed with the appropriate materials to form a resinous substance. Further examples of these amino cross-linking agents are the polyalkoxymethylbenzoguanamine, alkoxymethylurea, alkoxymethylglycoluril, alkoxymethylacrylamide and the like. These cross-linkers are normally used with a hydroxyl containing and/or carboxyl containing and/or an amide containing functional resin such as the acrylic resins, the polyester resins, the alkyd resins and the epoxy resins or polyesterurethanes. A typical binder in this amino cross-link resin system is a hydroxyl, and/or carboxyl, and/or amide functional resin such as an acrylic, polyester, alkyd, or disphenol A-epichlorhydrin glycidyl ether resin. The amount of the hydroxyl, acid or amide groups which can be used either singularly or in combination with one another can be as low as 0.5 gram mol per 1,000 gram of resin or an acid or hydroxyl number of about 28. The amount of functional groups can be as high as 6 gram mol per 1,000 gram of resin, which translates into a hydroxyl or carboxyl number of 336. The resin can be either di or polyfunctional, meaning trifunctional or tetrafunctional and the like.

The oxazolidine moiety can be, and preferably is, attached to a polyester or an acrylic polymer in the $R_3$ position, to assure non-volatility of the oxazolidine moiety. As shown in the description of the structure of the oxazolidine, $R_3$ can be an acrylic or polyester moiety. In the $R_3$ definition, if $R_3$ is a polyester or acrylic moiety, $R_3$ can contain additional oxazolidine moieties. A typical structure of a polyester containing the oxazolidine moiety is shown below. This polyester or acrylic is, in most instances, not the binder resin which can be any other hydroxyl or carboxyl functional resin.

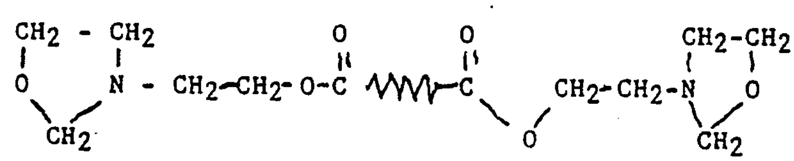

It has been shown in the examples that the types of binder which can be used in this invention are illustrated but there has not been described its composition in any detail. These acid catalysts are used in acid catalyzed amino resin cross-linked coatings formulations.

The oxazolidines used in the present invention can be prepared by the reaction of a dialkanol amine with an aldehyde or a ketone and removing the water produced by vacuum or by azeotropic techniques.

Typical amines useful for this invention are diethanolamine or diisopropanol amine and the like or secondary amines obtained by the reaction of ammonia with an epoxy compound. The aldehydes useful in this invention can be formaldehyde, acetaldehyde, butyraldehyde, isobutyraldehyde, and the like, or longer chain aldehydes or dialdehydes such as glyoxal, glutaraldehyde, and the like.

Typical ketones suitable in this invention are acetone, methyl ethyl ketone, methyl isobutyl ketone, cyclohexanone, methyl cyclohexanone, methyl n-amyl ketone, and the like.

## Claims

(1) A composition of matter comprising a salt of an oxazolidine having a molecular weight above about 350 having the following structural formula:

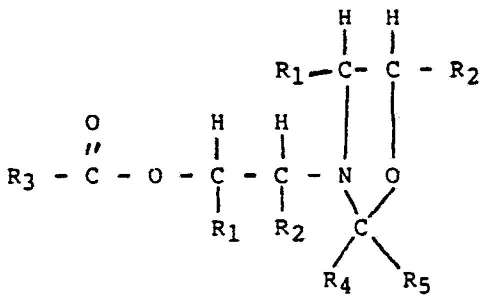

wherein $R_1$ and $R_2$ are separately either a $C_1$ to $C_{18}$ alkyl moiety, a $-CH_2-O-R_1$ or H; $R_3$ is $R_1$, or $R_2$ or is a polyester or acrylic moiety containing optionally other oxazolidine moieties; $R_4$ or $R_5$ are separately H, or a $C_1$ to $C_{18}$ moiety, or a cyclic $C_4$-$C_5$ moiety; $R_4$ may be a valence bond to another carbon of a different oxazolidine moiety; converted to a salt with an acid having a pK value below about 2.5 and wherein at least one of the $R_1$, $R_2$, $R_3$, $R_4$ and $R_5$ is an alkyl group or a polyester or an acrylic moiety so as to provide said minimum molecular weight of at least 350.

(2) The oxazolidine of Claim 1 in which $R_3$ is a polyester moiety.

(3) The oxazolidine of Claim 2 in which $R_1$, $R_2$, $R_4$ and $R_5$ are Hydrogen.

(4) The oxazolidine of Claim 1 in which $R_3$ is an acrylic moiety.

(5) The oxazolidine of Claim 4 in which $R_1$, $R_2$, $R_4$ and $R_5$ are Hydrogen.

(6) The composition according to Claim 1 in which the acid is dodecylbenzene sulfonic acid.

(7) The composition according to Claim 1 in which the acid is toluene sulfonic acid.

(8) The composition according to Claim 1 in which the acid is an alkyl benzene sulfonic acid.

(9) The composition according to Claim 1 in which the acid is an alkyl naphthalene sulfonic acid.

(10) A composition of matter comprising a blend of an amino-formaldehyde resin, a polymer containing functional hydroxyl, carboxy, and/or amide reactive sites, catalyzed with the oxazolidine salt of Claim 1.

(11) A composition of matter comprising a blend of an amino-formaldehyde resin, a polyester resin containing functional hydroxyl and/or carboxyl groups, catalyzed with the oxazolidine salt of Claim 1.

(12) A composition of matter comprising a blend of an amino-formaldehyde resin, an acrylic resin containing functional amide, hydroxyl carboxyl groups, and/or vinyl groups, catalyzed with the oxazolidine salt of Claim 1.

(13) A composition of matter comprising a blend of an amino-formaldehyde resin, an epoxy resin containing functional hydroxyl groups, catalyzed with the oxazolidine salt of Claim 1.

(14) A composition of matter comprising a blend of an amino-formaldehyde resin, a polyurethane resin containing functional hydroxyl groups, catalyzed with the oxazolidine salt of Claim 1.

(15) A composition of matter comprising a blend of an amino-formaldehyde resin, an acrylic resin containing functional hydroxyl, amide, carboxyl and/or vinyl groups, catalyzed with the oxazolidine salt of Claim 1.

European Patent Office

# EUROPEAN SEARCH REPORT

Application Number

EP 88 30 3473

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 200 729 (L.J. CALBO)<br>* Claims; column 5, lines 37-58 *<br>--- | 1 | C 08 K 5/42<br>C 08 L 33/00 //<br>(C 08 L 33/00<br>C 08 L 67:00<br>C 08 L 61:20 ) |
| D,A | HIGH SOLIDS COATINGS, vol. 7, no. 3, September, 1982, pages 23-28, Technology Marketing corp., M.T. NOWAK: "High solids coatings - formulation aspects"<br>* Table VI *<br>--- | 1 | |
| A | US-A-4 381 388 (G. NAPLES)<br>----- | | |

TECHNICAL FIELDS SEARCHED (Int. Cl.4)

C 08 K
C 08 L
C 09 D

The present search report has been drawn up for all claims

| Place of search | Date of completion of the search | Examiner |
|---|---|---|
| THE HAGUE | 10-08-1988 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)